## Europäisches Patentamt

## European Patent Office

## Office européen des brevets

(19)

(11) **EP 0 888 696 B1**

(12) **EUROPÄISCHE PATENTSCHRIFT**

(45) Veröffentlichungstag und Bekanntmachung des Hinweises auf die Patenterteilung:
**21.07.2004 Patentblatt 2004/30**

(21) Anmeldenummer: **97904977.2**

(22) Anmeldetag: **11.03.1997**

(51) Int Cl.⁷: **H04Q 3/545**, H04M 11/04

(86) Internationale Anmeldenummer:
**PCT/CH1997/000098**

(87) Internationale Veröffentlichungsnummer:
**WO 1997/035446 (25.09.1997 Gazette 1997/41)**

(54) **VERFAHREN ZUM ÜBERTRAGEN VON INFORMATIONEN VON EINER INFORMATIONSQUELLE ZU INFORMATIONSEMPFÄNGERN**

METHOD FOR TRANSMISSION OF INFORMATION FROM AN INFORMATION SOURCE TO INFORMATION RECEIVERS

PROCEDE POUR LA TRANSMISSION D'INFORMATIONS ENTRE UNE SOURCE D'INFORMATIONS ET DES RECEPTEURS D'INFORMATIONS

(84) Benannte Vertragsstaaten:
**CH DE FR GB IT LI**

(30) Priorität: **20.03.1996 CH 72996**

(43) Veröffentlichungstag der Anmeldung:
**07.01.1999 Patentblatt 1999/01**

(73) Patentinhaber: **Siemens Schweiz AG**
**8047 Zürich (CH)**

(72) Erfinder:
- **ABELN, Thomas**
  **CH-8032 Zürich (CH)**
- **KELLER, Matthias**
  **CH-8603 Schwerzenbach (CH)**
- **LIETHA, Peter**
  **CH-5525 Fischbach-Göslikon (CH)**
- **SCHWARZ, Stefan**
  **CH-8134 Adliswil (CH)**
- **GIESE, Peter**
  **D-85604 Zorneding (DE)**

(74) Vertreter: **Kley, Hansjörg**
**c/o Siemens AG**
**Patentabteilung**
**Postfach 22 16 34**
**80506 München (DE)**

(56) Entgegenhaltungen:
EP-A- 0 529 343          DE-A- 2 717 137
GB-A- 2 266 431

- **NTT REVIEW, Bd. 3, Nr. 4, 1.Juli 1991, Seiten 62-68, XP000262716 TATSUHIRO NAGANAWA ET AL: "ISDN GROUP COMMUNICATION SYSTEM"**

**Beschreibung**

Die vorliegende Erfindung betrifft ein Verfahren nach dem Oberbegriff des Patentanspruchs 1.

In komplexen Systemen der Nachrichten- und der Datentechnik werden heute immer mehr unterschiedlichste Funktionen in die Peripherie verlagert. Ein Beispiel für diese Entwicklung sind moderne Kommunikationssysteme mit immer intelligenteren Endgeräten. Diese Endgeräte weisen eine Vielzahl von Leistungsmerkmalen und Hilfsmitteln (z. B. Bildschirm) auf, welche dem Benützer ermöglichen, verschiedenste Funktionen sehr einfach in Anspruch zu nehmen. Mit dem Verschieben der Intelligenz in die Peripherie wird ausserdem erreicht, dass bei einem Ausfall zentraler System-Einheiten nicht das ganze System ausfällt, sondern lediglich eine Verminderung von dessen Leistungsfähigkeit in Kauf genommen werden muss.

Moderne intelligente Femmelde-Endgeräte sind programmgesteuert und mit mindestens einem Prozessor ausgestattet, der mit zentralen Einheiten des Kommunikationssystems kommuniziert. An grossen Systeme können tausend oder mehr Endgeräte angeschlossen sein, wobei in jedem Endgerät für die Abwicklung von Kommunikationsfunktionen notwendige Programme und Daten gespeichert sind. Oft handelt es sich um grosse Mengen von Programmcode und Daten. Im Zuge der Weiterentwicklung des Systems oder aufgrund von betreiberspezifischen Konfigurationsänderungen müssen Programmcode und/oder Daten in den Endgeräten jeweils ganz oder teilweise auf den neuesten Stand gebracht werden. Bei der Aktualisierung der Endgeräte ist es von Vorteil, wenn dies von einer einzigen zentralen Stelle (Programmspeicher, Datenbank) aus betriebsbegleitend, d.h. ohne den Betrieb des Systems unterbrechen zu müssen, durchgeführt und dabei die bestehende Infrastruktur des Systems möglichst unverändert benützt werden kann. Ferner sollte die Aktualisierung möglichst wenig Zeit beanspruchen, um die Betriebsbereitschaft des Systems - wenn überhaupt - nur während kurzer Zeit zu beeinträchtigen.

Der Zeitfaktor ist vor allem dann von Bedeutung, wenn eine grosse Anzahl Endgeräte mit grossen Code- und Datenmengen aktualisiert werden muss. Dann besteht oft das Problem einer den zeitlichen Anforderungen genügenden Übertragungskapazität zwischen der zentralen Stelle und den zu aktualisierenden Endgeräten.

Zur Lösung dieses Problems wird in [1] vorgeschlagen, über das öffentliche ISDN eine Gruppe von Teilnehmern bzw. Endgeräten zu bilden. Einzelne dieser Endgeräte sind über ISDN direkt mit einer Zentraleinheit zur Versorgung mit einer Information verbindbar. Andere dieser Endgeräte werden von bereits mit einer Information versorgten Endgeräten versorgt. Nachteilig bei diesem System ist, dass zur Identifizierung der Gruppenzugehörigkeit ein besonderer in den Endgeräten gespeicherter Gruppencode erforderlich ist. Geht auch dieser Gruppencode verloren, ist das Endgerät innerhalb des ISDN von jedem Gerät aus erreichbar und kann gegebenenfalls mit einer ungültigen oder blockierenden Information versorgt werden.

In [2] wird ein Endgerät offenbart, das über gewöhnliche Telefonverbindung zu anderen gleichartigen Endgeräten erlaubt, Programmdaten wie z.B. Rufnummemlisten in Punkt-Punkt Verbindungen auszutauschen.

Diese Problematik tritt nicht nur wie oben geschildert in Anwendungen der Femmeidetechnik auf. Sie besteht grundsätzlich in jeder Art von komplexen Systemen, in denen eine Vielzahl von peripheren Einheiten von einer zentralen Steile aus jeweils informationsmassig auf den neuesten Stand gebracht werden muss. Dies ist beispielsweise auch in grossen Datenverarbeitungssystemen und Datennetzen der Fall.

Der vorliegenden Erfindung liegt daher die Aufgabe zugrunde, ein Verfahren anzugeben, das ermöglicht, in einem System grosse Mengen von Programmcode und Daten (nachfolgend kurz auch "Informationen" genannt) innert kürzester Zeit von einer zentralen Stelle aus an eine Vielzahl von dezentralen Stellen des Systems zu übertragen und dabei die zur Verfügung stehende Übertragungskapazität optimal zu nutzen.

Diese Aufgabe wird durch die im kennzeichnenden Teil des Patentanspruchs 1 angegebenen Massnahmen gelöst. Vorteilhafte Ausgestaltungen und eine Anwendung der Erfindung sind in weiteren Ansprüchen angegeben.

Die erfindungsgemässe Verteilung der Informationen erfolgt in der Art einer Kettenreaktion, die von einer zentralen Stelle des Systems aus ausgelöst wird und dann in aufeinanderfolgenden Schritten alle mit neuen Informationen zu versorgenden peripheren Stellen des Systems erfasst. Dadurch lassen sich grosse Mengen identischer Informationen rasch an viele periphere Stellen übertragen. Weitere Vorteile des Verfahrens werden aus der nachfolgenden Beschreibung eines Ausführungsbeispieles ersichtlich.

Die Erfindung wird anhand einer Zeichnung beispielsweise näher erläutert. Dabei zeigt

Fig. 1    den prinzipiellen Aufbau eines Systems, in dem die Erfindung anwendbar ist

Fig. 2    die Struktur einer Kommunikationsanlage, in der die Erfindung besonders vorteilhaft angewendet werden kann.

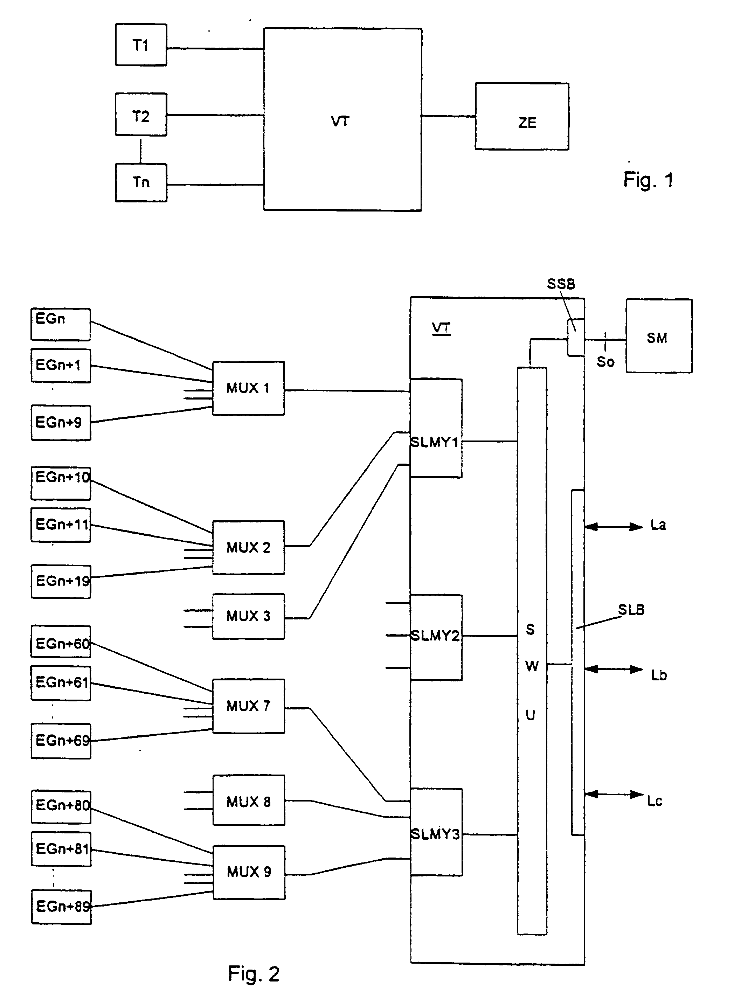

Das System in Fig.1 besteht im wesentlichen aus einer zentralen Einheit ZE, einem Vermittlungsteil VT und einer Vielzahl von peripheren Einheiten T1, T2, ... Tn. Das System kann vom Systembetreiber von der zentralen Einheit ZE aus konfiguriert werden. Insbesondere lassen sich von dort aus die penpheren Einheiten T nach Bedarf konfigurieren. Hierzu ist die zentrale Einheit ZE über den Vermittlungsteil VT mit den betreffenden peripheren Einheiten T1, T2, ... Tn verbindbar. Die penpheren Einheiten T1, T2, ... Tn sind über den Vermittlungsteil VT auch beliebig untereinander verbindbar.

Eine nach diesem Prinzip aufgebaute digitale Kommunikationsanlage besteht gemäss Fig.2 im wesentlichen aus einem Vermittlungsteil VT und einer Vielzahl an den Vermittlungsteil VT angeschlossener Endgeräte EG. Ferner ist an den Vermittlungsteil VT über eine So-Schnittstelle (mit zwei B-Kanälen zu 64kbit/s und einem D-Kanal zu 16 kbit/s) ein Systemmanager SM angeschlossen. Als Systemmanager SM kann ein Rechner (Personal Computer) mit grosser Speicherkapazität und mit einem Bildschirm eingesetzt werden.

Der Vermittlungsteil VT besteht aus einem Durchschaltenetzwerk SWU, an das Durchschattegruppen SLMY1 ... SLMY3 angeschlossen sind. Jede Durchschaltegruppe SLMY ist einerseits über eine 8 Mbit-Leitung mit dem Durchschaltenetzwerk SWU und andererseits je über eine 8 Mbit-Leitung mit drei Multiplexem MUX verbunden. Die Durchschaltegruppe SLMY weist einen Koppler zur Durchschaltung der vom Durchschaltenetzwerk SWU kommenden Sprach- und Signalisierkanäle (Time slots) zu den Multiplexem auf. An jeden Multiplexer MUX sind 10 Endgeräte EG über je eine 2 Mbit-leitung angeschlossen. Die Multiplexer MUX verfügen über einen Koppler, der die Sprach- und Signalisierungskanäle der von den Durchschaltegruppen SLMY kommenden 8 Mbit-Leitung zu den entsprechenden Endgeräten EG durchschaltet. Die Multiplexer MUX werden von der zugeordneten Durchschaltegruppe SLMY gesteuert. Das Durchschaltenetzwerk SWU ist ein digitaler Koppler mit einer der Durchschaltung von Verbindungen dienenden Steuerung. Damit besteht die Möglichkeit, beliebige Endgeräte EG über die Durchschaltegruppen SLMY und das Durchschaltenetzwerk SWU miteinander zu verbinden und über diese Verbindungen Daten und Sprachinformationen auszutauschen. Ferner sind über eine Schnittstellenbaugruppe SLB am Durchschaltenetzwerk SWU externe Leitungen, wie z.B. zum öffentlichen Femmeldenetz führende analoge oder digitale Leitungen, wie Amtsleitungen La, Mietleitungen Lb und Standleitungen Ls angeschlossen, so dass die Endgeräte EG über den Vermittlungsteil VT auch mit externen Stellen in Verbindung treten können. Die in der Zeichnung dargestellte Anzahl von Durchschaltegruppen SLMY, Multiplexer MUX und Endgeräte EG ist als der vorliegenden Erläuterung dienendes Beispiel zu betrachten; selbstverständlich ist auch eine andere Konfiguration der Kommunikationsanlage denkbar.

Die Endgeräte EG bilden die Schnittstelle zwischen den Benützern und dem Kommunikationssystem und stellen dem Benützer je nach Anwendungsfall eine Vielzahl mehr oder weniger komfortabler Leistungsmerkmale zur Verfügung. In einer für den Devisenhandel in Banken eingesetzten Ausführungsform der Kommunikationsanlage weisen die Endgeräte EG beispielsweise für verschiedene Ein- und Ausgaben (wie z.B. Zielwahl) eine Tastatur mit programmgesteuerter LCD-(Liquid Cristal Display) Beschriftung auf. Ferner können in den Endgeräten EG ein Bildschirm mit Benutzerführung sowie Freisprech- und Mithörfunktionen vorgesehen werden. Um allen diesen Funktionen gerecht zu werden, verfügt jedes Endgerät EG über einen eigenen Prozessor, der mittels in einem zugehörigen Programm- bzw. Datenspeicher abgespeicherter Software die betreffenden Funktionen steuert. Bei der Software handelt es sich um Vennittlungssoftware und um Bedienersoftware. Die Vermittlungssoftware steuert alle im Zusammenhang mit der Kommunikation stehenden Funktionen, wie die Überwachung und Durchschaltung von Verbindungen (Sprachkanäle) zu den Multiplexern MUX und den Durchschaltegruppen SLMY. Die Bedienersoftware übernimmt im wesentlichen die Steuerung der Bedieneroberfläche mit der Tastatur und dem Bildschirm.

Infolge von Weiterentwicklungen oder von betreiberspezifischen Änderungen kann es nun notwendig werden, in den Endgeräten EG abgespeicherte Informationen (Programme und/oder Daten) zu aktualisieren. Hierzu müssen mehr oder weniger grosse Mengen von Informationen an alle oder auch nur einen Teil der angeschlossenen Endgeräte EG übertragen werden. Eine Aktualisierung mit relativ kleiner zu übertragender Informationsmenge ist beispielsweise die Neubeschriftung einer Zieltaste, weil die zugeordnete Leitung geändert hat. Im Zuge von Weiterentwicklungen des Kommunikationssystems kann es aber auch notwendig werden, sämtliche Endgeräte EG mit neuen Programmversionen zu versorgen. In diesem Fall müssen die Endgeräte EG mit einer vergleichsweise grossen Menge von neuem Programmcode und/oder Daten versorgt werden. Dabei ist zu berücksichtigen, dass die Datenübertragungskapazität in der Kommunikationsanlage beschränkt ist und die Endgeräte EG trotzdem möglichst schnell und unter Ausnützung der im Kommunikationssystem vorhandenen Mittel mit den neuen Informationen zu versorgen sind.

Der Systemmanager SM bildet die Schnittstelle zwischen dem Betreiber und dem System. Er ist über eine So-Schnittstelle und eine Schnittstellenbaugruppe SSB mit dem Durchschaltenetzwerk SWU verbunden und weist eine grosse Datenbank auf, die unter anderem die Daten und Programme für die Konfiguration der Durchschaltegruppen SLMY und Endgeräte EG enthält.

Für die Versorgung der Endgeräte EG mit aktualisierten Informationen vom Systemmanager SM aus sind - unabhängig von der zu übertragenden Informationsmenge - verschiedene Möglichkeiten denkbar. Eine Möglichkeit besteht darin, die Endgeräte einzeln nacheinander mit den neuen Informationen zu versorgen. In diesem Fall nimmt die zur Versorgung aller Endgeräte mit neuen Informationen erforderliche Zeit proportional mit der Anzahl Endgeräte zu und wird bei einer grossen Anzahl Endgeräte entsprechend gross. Mit zusätzlichen So-Schnittstellen zwischen dem Systemmanager SM und dem Vermittlungsteil VT, die aber einen zusätzlichen Schaltungs- und Steuerungsaufwand bedeuten, kann die Übertragungszeit reduziert werden.

Idealer wäre eine gleichzeitige Versorgung aller Endgeräte EG mit neuen Informationen. Dies würde im System aber zusätzlich eine Einheit erfordern, die die sternförmige Verteilung der vom Systemmanager SM über die So-Schnittstelle in das System abgegebenen Informationen zu den Endgeräten EG vornimmt. Eine solche Verteileinheit erfordert jedoch ebenfalls einen zusätzlichen Schaltungs- und Steuerungsaufwand im System. Ferner würde der Vermittlungsteil VT während der Informationsübertragung durch die vielen während der **Informationsüber**tragung durchgeschalteten Verbindungen stark belegt und unter Umständen für die Durchschaltung von Daten- und Sprachverbindungen unzulässig blockiert.

Die Erfindung zeigt einen Weg, mit dem die Übertragungszeit bei einer Vielzahl von Endgeräten EG ohne zusätzlichen Schaltungsaufwand. insbesondere ohne zusätzliche So-Schnittstellen reduziert werden kann. Die erzielte Reduktion ist - wie unten noch gezeigt wird - vor allem bei einer grossen Anzahl Endgeräte EG und bei relativ grossen zu übertragenden Informationsmengen beträchtlich. Im Folgenden wird angenommen, dass alle am Kommunikationssystem angeschlossenen Endgeräte EGn, EGn+1, EGn+2 etc. (Fig.2) mit einer identischen neuen Programmversion geladen, d.h. mit einer relativ grossen Menge (z.B. 5 MByte) neuer Informationen versorgt werden müssen. Ferner wird angenommen, dass zwischen dem Systemmanager SM und dem Kommunikationssystem nur eine So-Schnittstelle vorhanden ist, von der nur ein B-Kanal für die Übertragung der Daten zur Verfügung steht, weil der andere B-Kanal für Rückmeldungen (z.B. Störungsmeldungen) an den Systemmanager SM benötigt wird. Die Versorgung der Endgeräte EG mit neuen Informationen läuft erfindungsgemäss wie folgt ab:

Der Betreiber (Systemadministrator) löst am Systemmanager SM die Funktion "Versorge alle Endgeräte mit neuen Informationen" aus. Eine dadurch aktivierte Ladeprozedur baut über das Durchschaltenetzwerk SWU, die Durchschalteeinheit SLMY1 und den Multiplexer MUX1 eine Verbindung vom Systemmanager SM zum ersten Endgerät EGn auf, das durch eine dem Systemmanager SM bekannte Gerätenummer identifiziert ist. Dabei wird auf den Verbindungsleitungen zwischen der Durchschalteeinheit SLMY1 und dem Multiplexer MUX 1 bzw. zwischen dem Multiplexer MUX 1 und dem angewählten Endgerät EGn ein freier Kanal (time slot) belegt, so dass zwischen dem Systemmanager SM und dem Endgerät EGn die Übertragung über eine Punkt-Punkt-Verbindung z. B. mit HDLC-Protokoll stattfinden kann. Sobald die Verbindung aufgebaut ist, gibt das Endgerät Egn eine Bereitschaftsmeldung an den Systemmanager SM ab, worauf die Übertragung der Informationen zum Endgerät EGn erfolgt. Nach diesem ersten Schritt der Ladeprozedur ist ein Endgerät, nämlich das Endgerät EGn mit den neuen Informationen versorgt.

Hierauf baut der Systemmanager SM in einem anschliessenden zweiten Schritt aufgrund der Ladeprozedur wie beschrieben eine Verbindung zum Endgerät EGn+1 auf und versorgt dieses mit den neuen Informationen. Gleichzeitig erteilt der Systemmanager SM dem Endgerät EGn den Auftrag, das Endgerät EGn+2 mit den zuvor im ersten Schritt erhaltenen neuen Informationen zu versorgen. Hierzu baut das Endgerät EGn über den Multiplexer MUX1, die Durchschalteeinheit SLMY1 und das Durchschaltenetzwerk SWU eine Datenverbindung zum Endgerät EGn+2 auf und versorgt dieses mit den im ersten Schritt vom Systemmanager SM erhaltenen neuen Informationen. Nach dem zweiten Schritt haben somit bereits drei Endgeräte EG die neuen Informationen erhalten. Die Prozedur kann nun mit weiteren gleichen Schritten fortgeführt werden, bis alle mit den Informationen zu versorgenden Endgeräte die neuen Informationen erhalten haben. Nachstehende Tabelle zeigt eine Übersicht für 1 bis m Schritte, wobei mit Sender das die Informationen abgebende Gerät (SM bzw. EG) und mit Empfänger das die Informationen erhaltende Gerät (EG) bezeichnet ist.

Tabelle 1:

| Schritte der Ladeprozedur | | | |
|---|---|---|---|
| **Schritt Nr.** | **Sender** | **Empfänger** | **Anzahl versorgte Endgeräte** |
| 1 | SM | EGn | 1 |
| 2 | SM | EGn+1 | 3 |
| | EGn | EGn+2 | |
| 3 | SM | EGn+3 | 7 |
| | EGn | EGn+4 | |
| | EGn+1 | EGn+5 | |
| | EGn+2 | EGn+6 | |

Tabelle 1:   (fortgesetzt)

| Schritte der Ladeprozedur | | | |
|---|---|---|---|
| **Schritt Nr.** | **Sender** | **Empfänger** | **Anzahl versorgte Endgeräte** |
| 4 | SM | EGn+7 | 15 |
| | EGn | EGn+8 | |
| | ... | ... | |
| | ... | ... | |
| | EGn+5 | EGn+13 | |
| | EGn+6 | EGn+14 | |
| 5 | | | 31 |
| 6 | | | 63 |
| 7 | | | 127 |
| 8 | | | 255 |
| 9 | | | 511 |
| m | | | $2^m$-1 |

Somit sind bei Vorhandensein eines einzigen B-Kanals zwischen dem Systemmanager SM und dem Vermittlungsteil VT nach m Schritten $2^m$-1 Endgeräte EG mit den neuen Informationen versorgt.

Um die beschriebene "Kettenreaktion" zu überwachen, kann vorgesehen werden, dass nach jedem Schritt von der, die Informationen empfangenden Endgeräten EG eine Meldung an den Systemmanager SM abgegeben wird, die dem Systemmanager SM den Empfang bzw. die erfolgreiche Übertragung der Informationen bestätigt. Der Systemmanager SM kann dann so gesteuert werden, dass der nächste Schritt der Ladeprozedur nur eingeleitet wird, wenn die Bestätigung von den betreffenden Endgeräten eingegangen ist.

Den mit diesem Verfahren erzielte Gewinn an übertragungszeit zeigt ein konkretes Beispiel mit folgenden Annahmen: Zu jedem Endgerät EG soll eine Informationsmenge von 5 Mbyte übertragen werden, wobei die effektive Übertragungsgeschwindigkeit 50 kBlt/sec beträgt. Ferner wird eine Koordinationszeit (Zeit zwischen Ende eines Auftrages und Beginn des nächsten Auftrages) von 2 sec zwischen dem Systemmanager SM und einem Endgerät EG angenommen. Die Zeit für die Übertragung der gesamten Informationsmenge vom Systemmanager SM zu einem Endgerät EG oder von einem Endgerät EG zu einem anderen Endgerät EG dauert somit ca. 800 sec (5 MByte : 50kbit/sec).

Würden die Endgeräte EG eines nach dem anderen mit einer Informationsmenge von 5 MByte versorgt, ergäbe dies bei 50 Endgeräten EG eine Übertragungszeit von ca. 667 Minuten (50 x 800 sec) und bei 500 Endgeräten EG eine Übertragungszeit von ca. 6667 Minuten, was in der Praxis nicht vertretbar ist. Bei einer Informationsübertragung nach dem beschriebenen Verfahren ergibt sich hingegen aufgrund der notwendigen Schritte (Tab. 1) für 50 Endgeräte EG eine tatsächliche Übertragungszeit von ca. 82 min (6 x 800 sec + 50 x 2 sec) und bei 500 Endgeräten eine solche von ca. 136 min (9 x 800 sec + 500 x 2 sec). Das vorgeschlagene Verfahren bringt somit eine erhebliche Reduktion der Übertragungszeit.

Falls eine weitere Reduktion der Übertragungszeit erreicht werden soll, kann die Anzahl Schritte und damit die für die Übertragung der Informationen insgesamt benötigte Zeit durch den Einsatz von mehr als einer So-Schnittstelle gemäss der Formel

$$N = (2^m\text{-}1) \times b \text{ oder } m = \log (N/b +1) / \log 2$$

(m=Anzahl Schritte, b=Anzahl verfügbare B-Kanäle und N=Anzahl Endgeräte EG) weiter reduziert werden. Von den weiteren eingesetzten So-Schnittstellen sollen jeweils beide B-Kanäle für die Übertragung zur Verfügung stehen. Mit zunehmender Anzahl zur Verfügung gestellter B-Kanäle ergibt sich mit zunehmender Anzahl zu aktualisierender Endgeräte EG folgende Anzahl benötigter Schritte:

Tabelle 2:

| Reduktion der Anzahl Schritte in Abhängigkeit der Anzahl So-Schnittstellen. | | | |
|---|---|---|---|
| Anzahl EG (N) | Anz. So-Schnittstellen | verfügbare B-Kanäle | Anzahl Schritte (m) |
| 50 | 1 | 1 | 6 |
| 100 | 2 | 3 | 6 |
| 150 | 3 | 5 | 5 |
| 200 | 4 | 7 | 5 |
| 250 | 5 | 9 | 5 |
| 300 | 6 | 11 | 5 |
| 350 | 7 | 13 | 5 |
| 400 | 8 | 15 | 5 |
| 450 | 9 | 17 | 5 |
| 500 | 10 | 19 | 5 |

Während beim Einsatz nur eines B-Kanals für die Versorgung von beispielsweise ca. 500 Endgeräten mit neuen Informationen 9 Schritte (Tab.1) benötigt werden, sind bei Verwendung von 19 B-Kanälen nur noch 5 Schritte nötig. Dies bedeutet eine weitere beträchtliche Reduktion der totalen Übertragungsszeit, die aber einen zusätzlichen Schaltungs- und Steuerungsaufwand erfordert. Für 500 Endgeräte beträgt die Übertragungszeit dann nur noch ca. 84 Minuten (5 x 800s + 500 x 2s).

Das beschriebene Verfahren kann auch angewendet werden, wenn nur ein Teil der an die Kommunikationsanlage angeschlossenen Endgeräte mit neuen Informationen zu versorgen sind. Hierzu bedarf es einer entsprechend programmierten Ladeprozedur, die die Übertragung von Informationen zu ausgewählten Endgeräten veranlasst.

Das Verfahren kann ferner auch zur Versorgung von Endgeräten mit neuen Informationen eingesetzt werden, die nicht einer Kommunikationsanlage gemäss Fig.2 angehören, sondern von dieser aus über die Leitungen La, Lb und Ls erreichbar sind.

Die Anwendung des Verfahrens ist nicht auf Kommunikationsanlagen beschränkt. Das Verfahren lässt sich z.B. auch in einem nach dem Prinzip von Fig.1 aufgebauten Datennetz einsetzen, das eine Vielzahl von untereinander verbindbaren Rechnern aufweist, die jeweils von einem Server aus mit neuen Daten und/oder Programmen versorgt werden müssen.

## Literaturliste

[1] 2254 NTT Review
3(1991)juli, No.4, Tokyo, JP

[2] GB 2 266 431 (Tunstall Group PLC)
Telecommunication Apparatus,
Date of publication 27.10.1993

## Patentansprüche

1.  Verfahren zum Übertragen von Informationen von einer Informationsquelle (ZE) zu Informationsempfängern (T1, T2, .., Tn), die sowohl miteinander als auch mit der zentralen Informationsquelle (ZE) verbindbar sind,
    **dadurch gekennzeichnet, dass**
    die Informationsempfänger (T1, T2, .., Tn) in aufeinanderfolgenden Schritten nacheinander mit identischen Informationen derart versorgt werden,
    dass in einem ersten Schritt die Informationsquelle (ZE) einen ersten Informationsempfänger (T1) mit den identischen Informationen versorgt,

dass in einem zweiten Schritt die Informationsquelle (ZE) einen zweiten Informationsempfänger (T2) und gleichzeitig der erste Informationsempfänger (T1) einen dritten Informationsempfänger (T3) mit den identischen Informationen versorgt, und

dass in weiteren Schritten die Informationsquelle (ZE) und die bereits mit den identischen Informationen versorgten Informationsempfänger (T1, T2, .., Tn) jeweils je einen weiteren Informationsempfänger (Tn) mit den identischen Informationen versorgen, bis alle mit Informationen zu versorgenden Informationsempfänger (T) die identische Informationen erhalten haben.

**2.** Verfahren nach Anspruch 1,
**dadurch gekennzeichnet, dass**
in jedem Schritt nach Abschluss der Informationsübertragung die Informationsempfänger (T1, T2, .., Tn) der Informationsquelle (ZE) den Erhalt der Informationen bestätigen, bevor der nächste Schritt eingeleitet wird.

**3.** Anwendung des Verfahrens nach Anspruch 1 in einer Fernmelde-, insbesondere Fernsprechvermittlungsanlage, mit mindestens einem zentralen Systemmanager (SM), der die Informationen für den Betrieb der Fernmeldeanlage und Mittel für die Übertragung von Informationen an eine Vielzahl von an die Fernmeldeanlage angeschlossenen Endgeräten (EG) enthält.

**Claims**

**1.** Method for transferring information from an information source (ZE) to information recipients (T1, T2, ..., Tn) which can be connected both to one another and to the central information source (ZE),
**characterised in that**
the information recipients (T1, T2, ..., Tn) are supplied with identical information in successive steps consecutively, such that
in a first step the information source (ZE) supplies a first information recipient (T1) with the identical information,
in a second step the information source (ZE) supplies a second information recipient (T2) and simultaneously the first information recipient (T1) supplies a third information recipient (T3) with the identical information, and
in further steps the information source (ZE) and the information recipients (T1, T2, ..., Tn) already supplied with the identical information each supply a further information recipient (Tn) in each case with the identical information, until all information recipients (T) to be supplied with information have received the identical information.

**2.** Method according to Claim 1,
**characterised in that**
in each step after conclusion of the information transfer the information recipients (T1, T2, ..., Tn) confirm the receipt of the information to the information source (ZE), before the next step is initiated.

**3.** Use of the method according to Claim 1 in a telecommunications system, in particular a telephone switching system, with at least one central system manager (SM) containing the information for operation of the telecommunications system and means for transferring information to a plurality of terminal devices (EG) connected to the telecommunications system.

**Revendications**

**1.** Procédé de transmission d'informations d'une source (ZE) d'informations à des récepteurs (T1, T2...,Tn) d'informations qui peuvent être reliés tant ensemble qu'également à la source (ZE) centrale d'informations,
**caractérisé en ce que**
les récepteurs (T1, T2...,Tn) d'informations sont alimentés en stades successifs les uns après les autres en des informations identiques de sorte que
dans un premier stade, la source (ZE) d'informations alimente un premier récepteur (T1 ) d'informations en les informations identiques,
dans un deuxième stade, la source (ZE) d'informations alimente un deuxième récepteur (T2) d'informations et en même temps le premier récepteur (T1) d'informations alimente un troisième récepteur (T3) d'informations en les informations identiques, et
dans d'autres stades, la source (ZE) d'informations et les récepteurs (T1, T2...,Tn) d'informations déjà alimentés en des informations identiques alimentent respectivement chacun un autre récepteur (Tn) d'informations en les informations identiques jusqu'à ce que tous les récepteurs (T) d'informations à alimenter en informations aient reçus les informations identiques.

2. Procédé suivant la revendication 1,
   **caractérisé en ce que**
   dans chaque stade après la fin de la transmission des informations, les récepteurs (T1, T2...,Tn) d'informations confirment à la source (ZE) d'informations la réception des informations avant que ne débute le stade suivant.

3. Utilisation du procédé suivant la revendication 1 dans une installation de télécommunication, notamment de téléphonie, comprenant au moins un gestionnaire (SM) central de système qui contient les informations pour le fonctionnement de l'installation de téléphonie et des moyens de transmission d'informations à une pluralité de terminaux (EG) raccordés à l'installation de téléphonie.

Fig. 1

Fig. 2